Europäisches Patentamt

European Patent Office

Office européen des brevets

(11) Numéro de publication: **0 404 084**

**A1**

## (12) DEMANDE DE BREVET EUROPEEN

(21) Numéro de dépôt: **90111608.7**

(22) Date de dépôt: **20.06.90**

(51) Int. Cl.5: **H04M 1/72, H04M 9/02, H04M 1/02**

(30) Priorité: **22.06.89 FR 8908437**

(43) Date de publication de la demande:
**27.12.90 Bulletin 90/52**

(84) Etats contractants désignés:
**AT BE CH DE DK ES GB IT LI NL SE**

(71) Demandeur: **ETA S.A., Fabriques d'Ebauches**
**Schild-Rust-Strasse 17**
**CH-2540 Granges(CH)**

(72) Inventeur: **Markus, Kappeler**
**St. Josefsgasse 6**
**CH-4500 Soleure(CH)**
Inventeur: **Beat, Voser**
**Schulstrasse 14**
**CH-2540 Granges(CH)**

(74) Mandataire: **Barbeaux, Bernard et al**
**ICB Ingénieurs Conseils en Brevets SA**
**Passage Max. Meuron 6**
**CH-2001 Neuchâtel(CH)**

(54) **Appareil téléphonique.**

(57) L'invention concerne les appareils téléphoniques qui comportent une base (2) et deux combinés (12, 14) ou un combiné et une base qui sert de deuxième combiné et qui sont prévus pour être connectés à deux lignes téléphoniques ou plus.

Contrairement aux appareils connus qui sont conçus pour être branchés à un nombre déterminé de lignes et pas à un autre, l'appareil selon l'invention comprend des moyens d'adaptation qui lui permettent d'être raccordé aussi bien à une seule ligne, qu'à deux lignes ou davantage, suivant le nombre maximum de lignes pour lequel il est prévu, et d'offrir à chaque fois les mêmes possibilités d'échange entre correspondants qu'un appareil connu qui serait branché au même nombre de lignes que lui.

Les moyens d'adaptation comprennent de préférence des moyens de commutation (84, 92) que l'on peut faire changer d'état en agissant sur un dispositif de commande accessible de l'extérieur de l'appareil mais ils peuvent comprendre aussi des commutateurs ou des connexions par fils situés à l'intérieur de celui-ci.

Fig.3

La présente invention concerne les appareils téléphoniques.

On connaît déjà des appareils téléphoniques qui comprennent une base avec un clavier ou un disque pour composer des numéros d'appel et un certain nombre de boutons de commande, et deux combinés qui peuvent être placés sur cette base.

Il existe également depuis peu des appareils qui n'ont qu'un seul combiné et dont la base est réalisée pour pouvoir être utilisée comme deuxième combiné.

D'une manière générale, parmi ces appareils il y a ceux qui sont destinés à n'être branchés qu'au bout d'une seule ligne téléphonique et ceux qui sont prévus pour être reliés à deux lignes ou davantage.

Le problème actuellement c'est que chaque appareil est conçu spécialement pour pouvoir être connecté à un nombre déterminé de lignes et pas à un autre.

Donc, par exemple, si l'on possède un appareil privé pour deux lignes et si l'on change de logement pour entrer dans un où l'on ne peut plus disposer que d'une seule ligne, cet appareil devient inutile et l'on est obligé de s'en procurer un autre, ce qui est évidemment gênant.

Le but de l'invention est de fournir un appareil téléphonique qui ne présente pas cet inconvénient des appareils existants et il est atteint grâce au fait que l'appareil selon l'invention comporte non seulement au moins une première paire et une deuxième paire de bornes de connexion destinées a être reliées respectivement à une première et une deuxième lignes téléphoniques ; un premier et un deuxième ensembles comprenant chacun un écouteur et un microphone ; au moins un dispositif de sonnerie ; un dispositif de sélection de numéros pour composer des numéros d'appel ; un premier et un deuxième dispositifs de commande associés respectivement aux premier et deuxième ensembles et qui peuvent être actionnés volontairement pour mettre en fonctionnement ou non chacun de ces ensembles ; un dipositif de sélection de ligne ; et des premiers moyens de commutation sur lesquels peuvent agir les premier et deuxième dispositifs de commande et le dispositif de sélection de ligne pour permettre de relier sélectivement le dispositif de sélection de numéros et les premier et deuxième ensembles aux première et deuxième paires de bornes de connexion, mais également des moyens d'adaptation qui, lorsqu'ils sont dans un premier état, permettent au dispositif de sélection de numéros et aux premier et deuxième ensembles d'être reliés par les premiers moyens de commutation à la deuxième paire de bornes de connexion et qui les en empêchent lorsqu'ils sont dans un deuxième état.

Ainsi, pour raccorder un appareil téléphonique de ce genre par exemple à une seule ligne alors qu'il l'était avant à deux, il suffit de faire passer ses moyens d'adaptation de leur premier état dans lequel ils se trouvaient à leur deuxième état et de changer le cordon de raccordement pour deux lignes qui le reliait à une prise en un cordon pour une seule ligne ou bien encore de supprimer le cordon pour la deuxième ligne si il y en avait deux.

De plus, si les moyens d'adaptation comprennent des deuxièmes moyens de commutation qui peuvent être mis dans un premier et un deuxième état qui correspondent aux leurs et un troisième dispositif de commande accessible de l'extérieur de l'appareil, qui peut être actionné manuellement pour mettre ces deuxièmes moyens de commutation dans leur premier ou leur deuxième état et si, en plus, les bornes de connexion sont constituées par exemple par les contacts d'un ou de deux jacks qui se trouvent à l'arrière de la base de l'appareil et dans lequel ou lesquels on peut enfoncer la ou les fiches d'un ou deux cordons, il est facile de procéder soi-même à ce changement de raccordement.

Par contre, si les moyens d'adaptation comprennent par exemple un commutateur ou des connexions par fils à l'intérieur de la base de l'appareil, ce qui est tout à fait possible, et si les fils du cordon ou des cordons de raccordement ont des extrêmités qui sont fixées également à l'intérieur de cette base pour être reliées aux paires de bornes de connexion, ce qui arrive souvent, le changement de raccordement est un peu plus difficile, mais il ne pose aucun problème, tout au moins pour un installateur.

D'autre part, il est bien clair que grâce a l'invention, il est possible de fabriquer un appareil téléphonique qui peut être adapté et branché à un nombre quelconque de lignes, inférieur ou égal à un nombre maximum choisi au départ. Pour cela il suffit de s'arranger pour que ses moyens d'adaptation puissent être placés dans un nombre d'états différents qui correspond à ce nombre maximum de lignes et de concevoir son dispositif de sélection de ligne de façon que, quel que soit le nombre de lignes auxquelles il sera connecté par la suite, il puisse fonctionner comme un appareil existant et permettre notamment à deux personnes de converser simultanément avec un même correspondant en utilisant une seule ligne ou avec des correspondants différents en utilisant deux lignes séparées ou bien encore à une seule personne d'être en communication en même temps avec plusieurs autres.

Cela dit, il est clair aussi que les appareils qui existent actuellement et qui peuvent être connectés à plus de deux lignes sont relativement rares et qu'il n'est guère concevable d'obliger quelqu'un à acheter ou à louer un appareil qui lui offrira des possibilités qu'il ne pourra jamais utiliser et qui lui reviendra plus cher que celui dont il a besoin.

Pour cette raison, on est tenu d'envisager le cas qui sera certainement le plus fréquent où l'appareil selon l'invention est prévu pour pouvoir être branché seulement à une ou deux lignes.

Lorsqu'il en est ainsi et comme on le verra par la suite cet appareil peut être conçu de façon très simple et avec un nombre limité d'organes de commande afin qu'il puisse être utilisé très facilement.

D'autres caractéristiques et avantages de l'appareil téléphonique selon l'invention apparaîtront à la lecture de la description qui suit de deux formes possibles d'exécution choisies comme exemples, description qui se réfère au dessin annexé sur lequel :

- la figure 1 est une vue en perspective qui montre surtout l'avant de l'appareil selon l'invention lorsqu'il est réalisé selon la première de ces formes d'exécution ;

- la figure 2 est une vue qui montre l'arrière de ce même appareil ;

- la figure 3 est un schéma-bloc simplifié du circuit électrique de cet appareil ; et

- les figures 4 et 5 sont deux vues en perspective qui montrent sous des angles différents l'appareil selon l'invention lorsqu'il est réalisé selon l'autre forme d'exécution.

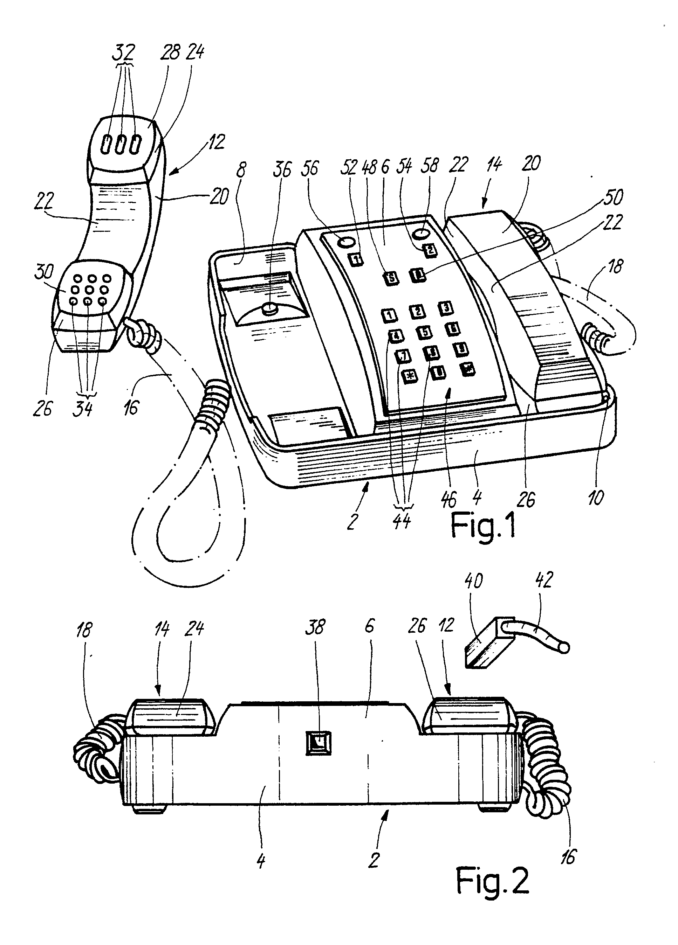

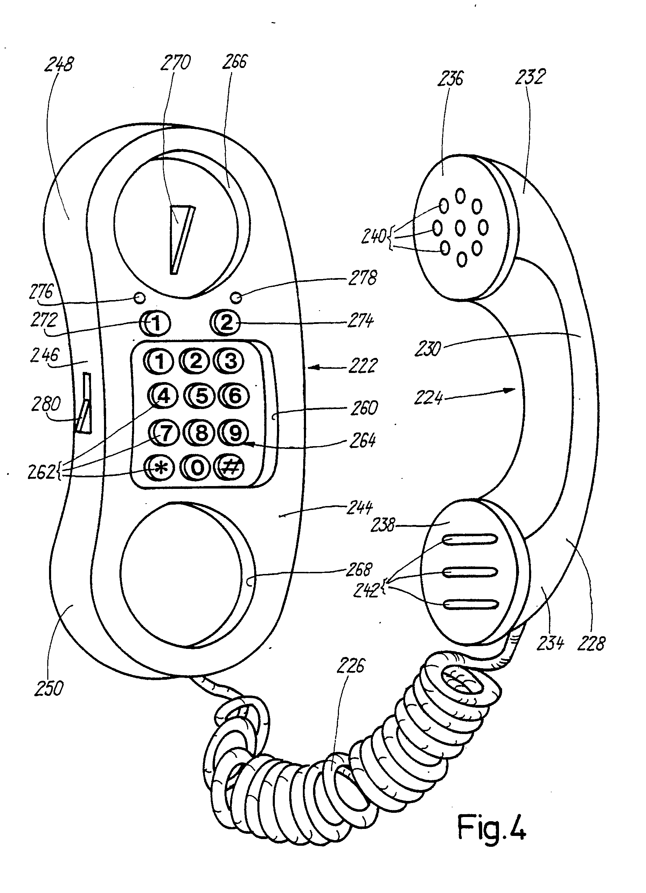

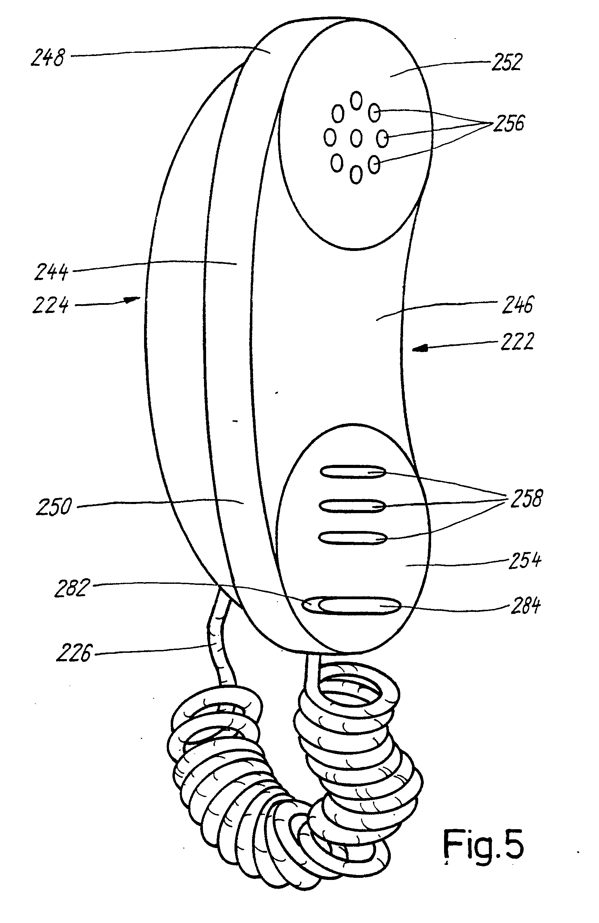

Les appareils qui sont représentés, vus de l'extérieur aux figures 1 et 2 et aux figures 4 et 5 sont précisément tous les deux des appareils qui sont prévus pour être connectés seulement à une ou deux lignes.

Celui des figures 1 et 2 comprend une base 2 avec un boîtier 4 de forme essentiellement rectangulaire, qui présente une partie centrale proéminente 6 et, de part et d'autre de celle-ci, deux logements 8 et 10 conformés pour recevoir et maintenir en place deux combinés identiques 12 et 14 qui sont reliés à cette base par des cordons respectifs 16 et 18.

Comme le montre la figure 1, les combinés 12 et 14 sont tout à fait classiques. Ils comprennent chacun un boîtier 20 allongé et légèrement incurvé, avec une partie centrale 22 qui peut être facilement prise en main et deux parties terminales 24 et 26 avec des faces sensiblement planes 28 et 30 qui sont percées respectivement de fentes 32 et de trous 34 et derrière lesquelles sont placés un écouteur et un microphone.

La figure 1 montre également qu'au fond du logement 8 de la base 2 se trouve un premier bouton-poussoir de commande 36 qui passe dans un trou du boîtier 4 et qui est situé à l'endroit où vient s'appuyer la face 28 de la partie terminale 24 du combiné 12 lorsque celui-ci est posé normalement sur la base. Ainsi, tant que ce combiné, que l'on qualifiera de "premier" est effectivement dans cette position, il maintient le bouton de commande 36 enfoncé à l'intérieur du boîtier 4. Par contre, lorsqu'on le soulève le bouton se relève automatiquement.

En fait, ce bouton-poussoir 36, qui constitue le premier dispositif de commande dont on a parlé, joue le même rôle vis-à-vis du combiné 12 que le crochet que l'on trouve encore dans des appareils classiques notamment à un seul combiné.

Naturellement, si le deuxième combiné 14 n'était pas représenté posé sur la base à la figure 1 on pourrait voir qu'il y a au fond du logement 10 un deuxième bouton-poussoir de commande identique au premier, qui peut être actionné automatiquement de la même façon en posant ce deuxième combiné sur la base et en le soulevant et qui constitue le deuxième dispositif de commande de l'appareil.

Si l'on regarde maintenant la figure 2 on peut constater que le boîtier 4 présente a l'arrière un trou 38. Au fond ou sur les côtés de ce trou 38 se trouvent six organes de contacts qui ne sont pas visibles sur le dessin et qui font de lui un jack dans lequel peut être enfoncée une fiche 40 avec six contacts correspondants non représentés et fixée à une extrémité d'un cordon 42 à six fils, pour connecter l'appareil à deux lignes téléphoniques, ou une fiche avec seulement quatre contacts et fixée au bout d'un cordon à quatre fils pour brancher cet appareil à une ligne unique.

Bien entendu, il n'y a en réalité que deux paires de contacts du jack 38 et deux paires ou une paire de contacts des fiches qui sont utiles pour les appels et les conversations téléphoniques mais comme cela se fait habituellement le jack et chaque fiche sont munis ici de deux contacts supplémentaires qui sont destinés à d'autres usages. Ils peuvent servir par exemple pour l'installation d'un fil de terre ou d'une sonnerie supplémentaire extérieure à l'appareil.

Par ailleurs, si l'on se reporte à nouveau à la figure 1, on peut voir que de la face avant de la partie centrale 6 du boîtier émergent les douzes touches 44 d'un clavier de sélection classique 46, deux boutons-poussoirs 48 et 50 situés au-dessus du clavier 46 et sur lesquels sont marquées respectivement les lettres S et D, et deux autres boutons-poussoirs 52 et 54 qui se trouvent au-dessus des précédents et sur lesquels sont inscrits respectivement les chiffres 1 et 2.

Dans cette forme d'exécution que l'on est en train de décrire les deux boutons-poussoirs 48 et 50 ne sont pas indépendants. Ils sont liés mécaniquement de façon que, lorsque l'un des deux est enfoncé, l'autre est forcément soulevé et il en est de même pour les deux boutons 52 et 54. Les paires de boutons 48, 50 et 52, 54 sont donc chacune équivalente à un bouton rotatif ou basculant à deux positions stables ou à un bouton coulissant comme ceux que l'on trouve dans beaucoup d'interrupteurs qui servent à allumer ou éteindre une lampe électrique ou a faire fonctionner des appareils ménagers.

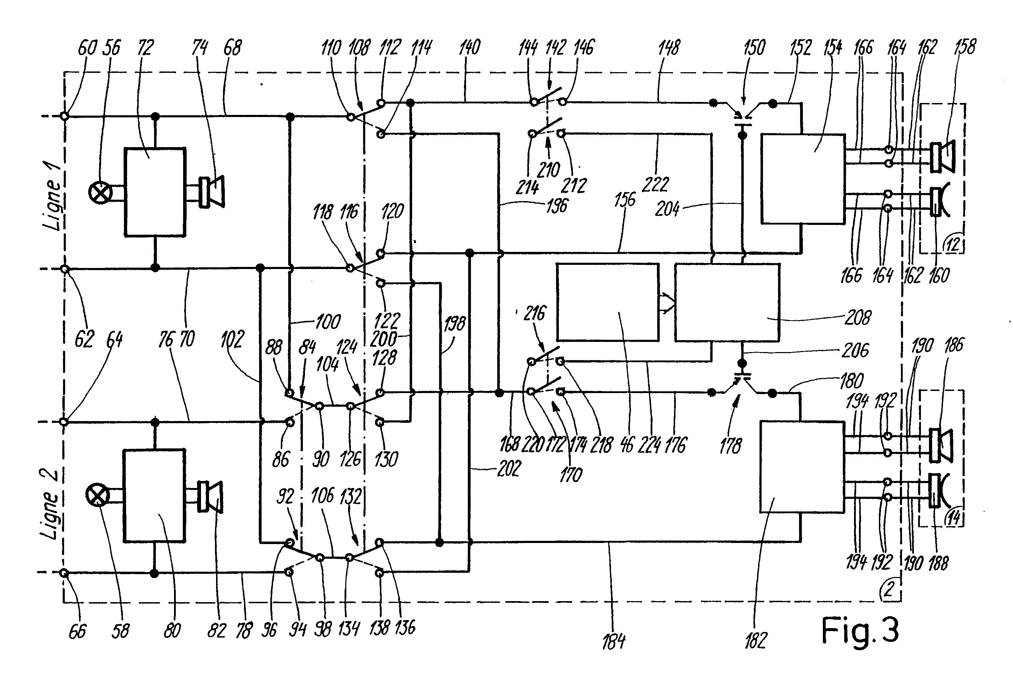

D'autre part, on se contentera pour l'instant de préciser en plus que les boutons 48 et 50 constituent ici le troisième dispositif de commande dont on a également parlé et qui permet d'adapter l'appareil lorsqu'on le relie à une seule ligne au lieu de deux ou inversément et les boutons 52 et 54 le dispositif de sélection de ligne dont il a déjà aussi été question. On expliquera plus loin comment on peut agir sur ces différents boutons pour utiliser l'appareil de la façon que l'on veut. Enfin, pour en terminer avec son aspect extérieur et avant de décrire son circuit électrique qui est représenté à la figure 3, il faut encore signaler que cet appareil comprend aussi deux diodes électroluminescentes (LED) 56 et 58, associées aux boutons 52 et 54 et placées au-dessus de ceux-ci et qui ne sont vraiment utiles que lorsqu'il est connecté à deux lignes car elles sont prévues pour indiquer en s'allumant la ligne d'où provient un appel.

Naturellement, on pourrait aussi s'arranger pour que ces diodes indiquent également la ligne que l'on a choisie pour appeler un correspondant mais, comme on pourra s'en rendre compte par la suite, si l'appareil est utilisé normalement, on peut le savoir simplement en regardant lequel les boutons 52 et 54 est enfoncé ou relevé.

Sur la figure 3, on peut voir à gauche deux premières bornes de circuit 60 et 62 qui représentent la première paire de contacts du jack 38 de l'appareil qui permettent de le connecter de la façon que l'on a indiquée à une ligne unique ou à une première ligne que l'on appellera dans les deux cas "ligne 1" et et deux autres bornes qui représentent la deuxième paire de contacts de ce jack grâce auxquels l'appareil peut être aussi relié à une deuxième ligne que l'on appellera "ligne 2".

Des deux bornes 60 et 62 partent deux conducteurs 68 et 70 qui, comme ceux dont on parlera par la suite, peuvent être constitués par des bandes conductrices d'un circuit imprimé et entre lesquels est branché un premier circuit de sonnerie 72 qui commande non seulement un vibreur 74 mais aussi la diode électroluminescente 56 (voir figure 1).

De même, des bornes 64 et 66 partent deux autres conducteurs 76 et 78 entre lesquels est branché un deuxième circuit de sonnerie 80 qui commande un deuxième vibreur 82 et la diode 58.

Comme il y à déjà les diodes 56 et 58 pour indiquer la ligne par laquelle un appel est transmis, il n'est pas nécessaire que les deux vibreurs émettent des sons de fréquences différentes mais cette possibilité n'est évidemment pas exclue.

Cela dit, on constate que les conducteurs 76 et 78 aboutissent à deux bornes non communes 86 et 94 de deux commutateurs bistables 84 et 92 et que les autres bornes non communes 88 et 96 de ceux-ci sont reliées respectivement par des conducteurs 100 et 102 aux conducteurs 68 et 70.

On constate également, grâce au trait mixte qui les relie sur la figure, que les contacts de ces deux commutateurs sont actionnés simultanément. Par contre, ce que cette figure ne montre pas c'est qu'ils le sont par les boutons-poussoirs 48 et 50 (voir figure 1). Les commutateurs 84 et 92 sont donc dans le cas présent les deuxièmes moyens de commutation qui forment avec les boutons 48 et 50 et les conducteurs 100 et 102 les moyens d'adaptation de l'appareil.

Les premiers moyens de commutation comprennent. eux, quatre autres commutateurs bistables 108, 116, 124 et 132 dont les contacts sont tous actionnés en même temps lorsque l'on agit sur l'un ou l'autre des boutons-poussoirs 52 et 54 (voir figure 1).

Les deux premiers, 108 et 116, de ces commutateurs ont des bornes communes 110 et 118 auxquelles aboutissent directement les conducteurs 68 et 70 et les deux autres, 124 et 132, des bornes communes 126 et 134 qui sont reliées par des conducteurs 104 et 106, respectivement, à celles 90 et 98 des commutateurs 84 et 92.

Si l'on regarde maintenant le haut de la figure, on remarque que l'une des bornes non communes 112 du commutateur 108 est reliée par un conducteur 140 à l'une des bornes 144 d'un interrupteur simple 142 dont le contact est actionné par le premier bouton-poussoir de commande 36 associé au premier combiné 12 (voir figure 1). L'autre borne 146 de cet interrupteur est connectée par un conducteur 148 à l'émetteur d'un transistor bipolaire 150 dont on verra l'utilité par la suite et dont le collecteur est relié par un conducteur 152 à un premier circuit vocal 154 qui est relié par ailleurs directement, par un conducteur 156, à l'une des bornes non communes 120 du commuteur 116.

Le circuit vocal 154, auquel l'écouteur 158 et le microphone 160 du premier combiné 12 sont connectés par les quatre fils 162 du cordon 16, quatre bornes de connexion 164 situées a l'intérieur du boîtier de la base 2 et quatre conducteurs 166, est un circuit tout à fait classique et, comme on le sait, dans un appareil téléphonique ordinaire, le circuit vocal est celui qui transmet, en les traitant, les signaux de conversation de la ligne ou d'une ligne à l'écouteur du ou d'un combiné et ceux qui sont produits par le microphone de ce dernier à la ligne en question.

Si l'on observe ensuite le bas de la figure on retrouve une partie de circuit tout à fait identique à celle que l'on vient de décrire.

En effet, un conducteur 168 relie l'une des bornes non communes 128 du commutateur 124 à l'une des bornes 172 d'un autre interrupteur simple 170 qui est actionné, lui, par le deuxième bouton-poussoir de commande associé au deuxième combiné 14 et qui, comme l'interrupteur 142, fait également partie des premiers moyens de commutation de l'appareil. De l'autre borne 174 de cet interrupteur 170 part un conducteur 176 qui mène a l'émetteur d'un autre transistor bipolaire 178 dont le collecteur est relié par un conducteur 180 à un deuxième circuit vocal 182 identique au premier 154. De plus, un autre conducteur 184 assure une liaison directe entre l'une des bornes non communes 136 du commuateur 132 et le deuxième circuit vocal 182 auquel sont connectés l'écouteur 186 et le microphone 188 du deuxième combiné 14, par les quatre fils 190 du cordon 18, quatre autres bornes de connexion internes 192 et quatre conducteurs 194.

En ce qui concerne les autres bornes non communes 114, 122, 130 et 138 des commutateurs 108, 116, 124 et 132, on peut voir qu'elles sont reliées respectivement aux conducteurs 168, 184, 140 et 156 par quatre conducteurs 196, 198, 200 et 202.

Pour en revenir aux transistors 150 et 178, il faut préciser qu'ils font partie du dispositif de sélection de numéros de l'appareil et qu'ils sont chargés de produire et d'émettre sur la ligne unique ou sur les lignes, suivant la façon dont cet appareil est branché, des signaux d'appels, plus exactement des impulsions, lorsque l'on compose des numéros de correspondants sur le clavier 46. Par contre, lorsqu'une communication est établie chacun de ces transistors doit simplement transmettre les signaux de conversation qui proviennent de la ligne ou d'une ligne au circuit vocal auquel il est relié et ceux qui sont produits par ce circuit vocal à cette ligne.

Pour cela, ces transistors 150 et 178 ont leurs bases qui sont connectées toutes les deux, par des conducteurs respectifs 204 et 206, à un circuit de sélection 208 qui est relié au clavier 46, schématisé sur la figure par un carré, et qui les commande de façon qu'ils soient alternativement conducteurs et non conducteurs lorsqu'ils doivent produire des impulsions d'appel et qu'ils restent conducteurs lorsqu'ils doivent transmettre des signaux de conversation.

De plus, il est évident que, lorsque l'appareil est branché à deux lignes et lorsque l'on compose un numéro sur le clavier après avoir pris un combiné pour être connecté à une ligne alors que l'autre ligne est déjà utilisée, il ne faut pas que des impulsions soient aussi émises à ce moment-là sur cette autre ligne. Pour cela, le circuit de sélection 208 doit savoir à tout moment si les interrupteurs 142 et 170 sont ouverts ou fermés. C'est la raison pour laquelle à ces deux interrupteurs 142 et 170 sont associés deux autres interrupteurs simples 210 et 216 qui sont actionnés en même temps qu'eux et qui ont chacun une borne 212, respectivement 218, reliée par un conducteur 222, respectivement 224, au circuit 208, les autres bornes 214 et 220 de ces interrupteurs 210 et 216 étant connectées à l'une des bornes d'une source d'alimentation en tension continue non représentée de l'appareil.

Le circuit de sélection 208 ne sera pas décrit en détail car il ne fait pas partie de l'invention et il peut être réalisé comme ceux de certains appareils téléphoniques connus qui sont prévus pour être branchés à deux lignes et n'émettre sur celles-ci que des signaux d'appel sous forme d'impulsions.

D'autre part, il est bien clair que ce circuit 208 et les transistors 150 et 178 pourraient être remplacés par un circuit qui serait relié aux circuits vocaux 154 et 182 et qui produirait des signaux d'appel en combinant deux par deux des signaux de fréquences acoustiques différentes. Une autre possibilité serait de conserver les transistors et d'avoir un circuit de sélection également relié aux circuits vocaux, qui pourrait produire ce genre de signaux et commander les transistors pour qu'ils émettent des impulsions afin que l'appareil puisse être connecté à n'importe quel réseau.

Enfin, il est clair aussi que, pour être complet, il faudrait parler en plus de différents circuits d'alimentation et de protection notamment contre les surtensions et les inversions de polarité des tensions d'entrée provenant des lignes, qui existent dans un appareil selon l'invention comme dans tous les autres, mais comme ces circuits sont parfaitement connus et ne font pas non plus partie de l'invention on peut se dispenser de le faire.

On va maintenant expliquer comment fonctionne l'appareil des figures 1 à 3.

Pour cela supposons tout d'abord qu'on vient de le brancher à une ligne unique c'est-à-dire à la ligne 1.

La première chose que l'on doit faire normalement c'est d'appuyer sur le bouton 52 et le bouton 48 s'ils ne sont pas déjà enfoncés.

Lorsque le bouton 52 est enfoncé les contacts des quatre commutateurs 108, 116, 124 et 132 sont dans les positions indiquées en traits pleins sur la figure 3, ce qui fait que leurs bornes communes 110, 118, 126 et 134 sont reliées à leurs bornes non communes 112, 120, 128 et 132, et lorsque le bouton 48 l'est également les contacts des commutateurs 84 et 92 sont eux aussi dans les positions indiquées en traits pleins sur la figure, afin de relier les bornes communes 90 et 98 de ces commutateurs à leurs bornes non communes 88 et 96.

Quant aux interrupteurs 142, 210, 170 et 216, ils restent ouverts tant que les deux combinés restent posés sur la base et que les premier, 36, et deuxième boutons-poussoirs de commande sont eux aussi enfoncés.

Supposons maintenant que l'on veuille appeler un correspondant.

Pour cela on commence par soulever l'un des combinés, par exemple, le premier 12, ce qui a pour conséquence de laisser le bouton-poussoir 36 se relever et de fermer les interrupteurs 142 et 210 sans modifier l'état des deux autres interrupteurs ni la position des contacts des six commutateurs bistables.

A partir de ce moment-là, le premier circuit vocal 154 est relié aux bornes 60 et 62, donc à la ligne 1, par une première ligne interne qui comprend. d'une part. le conducteur 152. le transistor 150 qui est alors conducteur, le conducteur 148, le contact de l'interrupteur 142, le conducteur 140, le contact du commutateur 108 et le conducteur 68 et, d'autre part, le conducteur 156, le contact du commutateur 116 et le conducteur 70.

Donc, pour appeler le correspondant que l'on désire, il suffit de composer son numéro d'appel sur le clavier 46, lorsque l'on entend la tonalité, pour faire émettre par le transistor 150 le train d'impulsions qui correspond à ce numéro. Ensuite, on peut converser avec lui si l'on a pu l'atteindre et lorsqu'à la fin on repose le premier combiné l'interrupteur 142 s'ouvre à nouveau, avec l'interrupteur 210, et rompt la ligne interne.

Si l'on prend au contraire le deuxième combiné 14 pour appeler ce correspondant c'est alors le deuxième bouton-poussoir de commande qui se soulève, les interrupteurs 170 et 216 qui se ferment et le deuxième circuit vocal qui est relié automatiquement à la ligne 1 par une deuxième ligne interne formée, d'une part, par le conducteur 180, le transistor 178, le conducteur 176, le contact de l'interrupteur 170, le conducteur 168, le contact du commutateur 124, le conducteur 104, le contact du commutateur 84, le conducteur 200 et une partie du conducteur 68 et, d'autre part, par le conducteur 184, le contact du commutateur 132, le conducteur 106, le contact du commutateur 92, le conducteur 102 et une partie du conducteur 70. De plus, c'est évidemment ici le deuxième transistor 178 qui est commandé par le circuit de sélection 208 pour produire les impulsions du numéro que l'on compose.

Dans un cas comme dans l'autre, si pendant que l'on est en ligne avec le correspondant en question, une autre personne désire participer à la conversation, il lui suffit de prendre l'autre combiné pour que le circuit vocal qui est associé à celui-ci soit relié lui aussi à la ligne 1 par celle des deux lignes internes précitées qui n'est pas utilisée.

Bien entendu, cette autre personne peut cesser de participer à la conversation quand elle le veut simplement en reposant le combiné qu'elle tient sur la base. Elle peut également la poursuivre seule lorsque l'on a soi-même remis le combiné que l'on a pris en place.

Par ailleurs, il est bien évident que l'on peut aussi se servir soi-même des deux combinés à la fois, par exemple pour mieux entendre lorsqu'on se trouve dans une ambiance bruyante, et que lorsque l'on reçoit un appel signalé par le fonctionnement du vibreur 74 et d'allumage de la diode 56 tout se passe de la même façon exepté que l'on a pas besoin de composer de numéro.

Voyons maintenant ce qui se passe lorsqu'on ne s'assure pas au départ que le bouton 52 est enfoncé ou si, par la suite, on appuie volontairement ou non sur le bouton 54, autrement dit lorsque les contacts des quatres commutateurs 108, 116, 124 et 132 se trouvent ou sont ramenés dans les positions indiquées en traits interrompus sur la figure 3, c'est-à-dire celles dans lesquelles ces contacts relient les bornes communes 110, 118, 126 et 134 aux bornes non communes 114, 122, 130 et 138. On verra ensuite ce qui arrive lorsque l'on fait la même chose avec les boutons 48 et 50.

Si l'on regarde attentivement cette figure 3, on se rend compte que le fait que les contacts des quatres commutateurs 108, 116, 124 et 132 ne soient pas dans les mêmes positions ne change rien au fonctionnement de l'appareil excepté que, lorsqu'on décroche les combinés 12 et 14, les circuits vocaux 154 et 182 ne sont plus reliés à la ligne 1 par les mêmes lignes internes que précédemment.

Plus précisément, pour le premier circuit vocal 154 la liaison se fait alors par une troisième ligne interne qui comprend, d'une part, le conducteur 152, le transistor 150, le conducteur 148, le contact de l'interrupteur 142, une partie du conducteur 140, le conducteur 200, le contact du commutateur 124, le conducteur 104, le contact du commutateur 84, le conducteur 108 et une partie du conducteur 68 et, d'autre part, une partie du conducteur 156, le conducteur 202, le contact du commutateur 132, le conducteur 106, le contact du commutateur 92, le conducteur 102 et une partie du conducteur 70, tandis que pour le deuxième circuit vocal la liaison se fait par une quatrième ligne interne formée, d'une part, par le conducteur 180, le transistor 198, le conducteur 176, le contact de l'interrupteur 170, une partie du conducteur 168, le conducteur 196, le contact du commutateur 108 et le conducteur 68 et, d'autre part, une partie du conducteur 184, le conducteur 198, le contact du commutateur 116 et le conducteur 70.

Par contre, pour ce qui est des boutons-poussoirs 48 et 50 et des contacts des commutateurs 84 et 92 qu'ils actionnent, il est visible que si ces contacts sont dans les positions représentées en traits interrompus où ils relient les bornes communes 90 et 98 aux bornes non communes 86 et 94, ils empêchent soit le premier circuit vocal, soit le deuxième d'être relié à la ligne 1, respectivement, par les troisième et deuxième lignes internes, selon que les contacts des quatres autres commutateurs sont dans leurs positions indiquées en traits interrompus ou en traits pleins. En fait, ceci n'a rien d'anormal car il ne faut pas oublier que les commutatuer 84 et 92 font partie des moyens d'adaptation. Ils ne font donc que jouer leur rôle en faisant cela. Ce qu'il faut voir au contraire, c'est que lorsque l'appareil est branché à une seule ligne et à la seule condition que le bouton 48 soit toujours enfoncé on peut se servir de n'importe quel combiné pour appeler un correspondant ou répondre à un appel sans avoir rien d'autre à faire qu'à prendre ce combiné et éventuellement faire un numéro et qu'il est possible alors d'utiliser l'autre combiné seulement en le décrochant. L'emploi de l'appareil est donc simplifié au maximum.

Admettons maintenant que l'appareil est connecté aux lignes 1 et 2.

Si l'on désire appeler un correspondant et si personne d'autre n'utilise l'appareil on peut prendre n'importe quel combiné et il n'y· a normalement pas de raison pour que l'on choisisse une ligne plutôt que l'autre.

Si le bouton 48 est enfoncé lorsque l'on décroche tout se passe comme si l'appareil n'était connecté qu'à la ligne 1 et comme on l'a expliqué précédemment, y compris lorsque les deux combinés sont utilisés en même temps.

Par contre, si c'est le bouton 50 qui est enfoncé tout dépend alors de la position des boutons 52 et 54.

Si le bouton 52 est lui aussi enfoncé le premier circuit vocal 152 est automatiquement connecté à la ligne 1 par la première ligne interne si l'on se sert du premier combiné 12 pour appeler. Si l'on utilise le deuxième combiné 14 le deuxième circuit vocal 182 est relié automatiquement à la ligne 2 par une cinquième ligne interne qui comprend toutes les parties de la deuxième jusque et y compris les contacts des commutateurs 84 et 92, plus les conducteurs 76 et 78.

Si, au contraire, le bouton 52 est relevé et le bouton 54 enfoncé et si l'on utilise le premier combiné, le premier circuit vocal est relié à la ligne 2 par une sixième ligne interne qui comprend toutes les parties de la troisième jusque et y compris les contacts des commutateurs 84 et 92, plus les conducteurs 76 et 78, et si l'on emploie le deuxième combine le deuxième circuit vocal est connecté à la ligne 1 par la quatrième ligne interne.

Supposons maintenant que le bouton 52 est enfoncé et que l'on est en ligne avec le correspondant que l'on a appelé. Si à ce moment-là une autre personne désire appeler un autre correspondant sur la ligne 2 il lui suffit de vérifier que le bouton 50 est enfoncé ou d'appuyer sur lui, de décrocher le deuxième combiné et de composer le numéro de cet autre correspondant. Ensuite, chacun peut mettre fin à la conversation qu'il entretient quand il veut en reposant le combiné qu'il détient, sans déranger celle de l'autre. Par ailleurs, plutôt que d'appeler un autre correspondant, cette autre personne pourrait répondre a un appel provenant de la ligne 2 et signalé par le buzzer 82 et la diode 58. De plus, comme on l'a vu, elle pourrait également participer a la conversation que l'on entretient soi-même en appuyant sur le bouton 48 si il n'est pas enfoncé.

Déjà, d'après ce qui précède, on peut se rendre compte que l'appareil peut être utilisé de nombreuses façons et il serait inutile et fastidieux de les envisager toutes.

On se contentera donc de dire que, lorsqu'il est connecté à deux lignes et utilisé correctement, cet appareil des figures 1 à 3 offre, avec seulement ses deux paires de boutons couplés 48 et 50 et 52 et 54, les mêmes possibilités d'échange entre correspondants que les appareils connus qui sont spécialement conçus pour cela, c'est-à-dire pour être branchés à deux lignes.

Enfin, avant de décrire la deuxième forme d'exécution que l'on a choisie comme exemple et qui est représentée sur les figures 4 et 5, il est utile de préciser que l'on pourrait aussi réaliser les interrupteurs et les commutateurs bistables du circuit de la figure 3 en utilisant des transistors plutôt que des contacts mobiles et des bornes et réunir dans une même puce de circuit intégré ces interrupteurs et ces commutateurs, les circuits vocaux 154 et 182, les transistors 150 et 178, le circuit de sélection 208 et même, éventuellement, les circuits de sonnerie 72 et 80.

L'appareil téléphonique des figures 4 et 5 comporte une base 222 qui est munie d'un jack non représenté pour pouvoir être connecté à une seule ligne ou à deux lignes téléphoniques de la même façon que le précédent et un seul combiné 224 qui peut être posé sur cette base et qui est relié à elle par un cordon 226.

Là encore, le combiné 224 n'a rien de spécial. Il comprend lui aussi, un boîtier 228 allongé et incurvé, avec une partie centrale 230 et deux parties terminales 232 et 234 avec des faces sensiblement planes 236 et 238 munies respectivement de trous 240 et de fentes 242 et derrière lesquelles se trouvent un écouteur et un microphone.

Dans cette deuxième forme d'exécution la base 222 est conçue pour servir elle-même de deuxième combiné et pour cela elle comprend un boîtier 244 dont la forme générale est semblable à celle du boîtier du combiné 224 et dans lequel sont logés un autre écouteur et un autre microphone.

Plus précisément, ce boîtier 244, qui est un peu plus grand que celui du combiné et allongé et incurvé comme lui, comprend également une partie centrale 246 destinée à être prise en main et deux parties terminales 248 et 250 à peu près de même importance, qui présentent du côté qui constitue le dessous de la base des faces planes 252 et 254, percées de trous 256 et de fentes 258 (voir figure 5), derrière lesquelles se trouvent l'écouteur et le microphone dont on vient de parler et qui sont situées sensiblement dans un même plan.

Naturellement, si les faces 252 et 254 sont planes et coplanaires c'est pour que la base 222 soit stable lorsqu'elle repose sur un support horizontal quelconque, par exemple sur une table de téléphone. Cependant, il est bien clair que la planéité de ces faces n'est pas une condition indispensable pour que cette stabilité soit assurée. Par exemple, on obtiendrait le même résultat avec des faces légèrement creuses qui auraient leurs bords dans un même plan ou avec des faces un peu bombées qui auraient seulement des parties centrales planes et coplanaires ou encore en combinant ces deux possibilités.

Cela dit, si l'on regarde la figure 4, on constate que le dessus ou le dos du boîtier 244 présente un évidement 260 situé dans sa partie centrale 246, du fond duquel émergent les douze touches 262 d'un clavier de sélection 264, et deux autres évidements plus petits 266 et 268, situés au contraire dans les parties terminales 248 et 250, qui ont une forme qui leur permet de recevoir celles 232 et 234 du combiné lorsque celui-ci est posé correctement sur la base et dans le fond de l'un, 266, desquels se trouve une fente par laquelle peut sortir un premier bouton-poussoir de commande 270 qui correspond celui, 36, de l'appareil de la figure 1 et qui peut être actionné de la même façon par le combiné 224.

On constate également la présence, au-dessus de l'évidement 260, de deux boutons 272 et 274, sur lesquels sont incrits les chiffres 1 et 2 et au-dessus desquels sont placées deux diodes électroluminescentes 276 et 278, et celle sur le côté du boîtier 244 d'un autre bouton 280. Les boutons 272 et 274 sont des boutons-poussoirs qui correspondent à ceux 52 et 54 de l'appareil de la figure I et qui sont également liés mécaniquement de façon que lorsque l'un est enfoncé l'autre est relevé. Le bouton 280 est, lui, un bouton basculant à deux positions stables sur lequel peuvent être inscrites les lettres S et D et qui remplace ici les boutons 48 et 50 de l'appareil décrit précédemment. De plus, ce bouton 280 est situé dans la partie centrale de la base 222 et du côté et à peu près à l'endroit où vient se placer le pouce d'un droitier lorsqu'il prend la base en main pour pouvoir être actionné facilement par un grand nombre de personnes.

Enfin, si l'on se reporte à la figure 5, on peut voir que la face 254 de la partie terminale 250 du boîtier de la base présente, en plus des fentes 258 dont on a déjà parlé et qui sont prévues pour laisser passer le son de la voix, une autre fente 282 dans laquelle peut naviguer un autre bouton-poussoir 284 du même genre que le bouton 270, qui reste enfoncé tant que la base repose sur un support et qui ressort automatiquement du boîtier de cette dernière lorsqu'on la soulève. Ce bouton 284 correspond évidemment au deuxième bouton-poussoir de l'appareil de la figure 1 qui est actionné par le deuxième combiné 14 dont la base 222 fait ici office.

Le circuit de la figure 3 peut également très bien convenir pour ce deuxième appareil que l'on vient de décrire, à condition, bien entendu, d'inclure dans la base l'écouteur 186 et le microphone 188 et de ne relier ceux-ci au deuxième circuit vocal 182 que par des connexions internes.

D'autre part, la façon d'utiliser ce deuxième appareil découle très facilement de celle du premier si l'on tient compte du fait qu'il est normal de se servir d'abord du combiné 224 pour appeler quelqu'un ou pour répondre à un appel. Il n'est donc pas nécessaire de l'expliquer.

L'invention n'est évidemment pas limitée aux formes d'exécution que l'on vient de décrire.

Par exemple, dans certains appareils le clavier de sélection pourrait être remplacé par un disque d'appel.

On pourrait très bien imaginer aussi une forme d'exécution dans laquelle l'un des combinés ou le combiné ne serait plus relié au circuit vocal correspondant par un cordon et des conducteurs internes mais par radio. Dans ce cas l'appareil devrait comprendre en plus un premier émetteur, un premier récepteur et une batterie logés dans le boîtier du combiné en question, une première antenne, reliée au premier récepteur, qui pourrait être aussi incluse dans ce boîtier ou être une antenne extérieure par exemple télescopique, un deuxième récepteur, un deuxième émetteur relié au circuit vocal en question et une seconde antenne associés à la base et enfin un système d'alimentation avec un convertisseur AC/DC pour permettre de recharger la batterie du combiné pendant qu'il n'est pas utilisé.

## Revendications

1. Appareil téléphonique comportant :
- au moins une première paire (60, 62) et une deuxième paire (64, 66) de bornes de connexion destinées à être reliées respectivement à une première et une deuxième lignes téléphoniques ;
- un premier (158, 160) et un deuxième (186, 188) ensembles comprenant chacun un écouteur et un microphone ;
- au moins un dispositif de sonnerie (72, 74) ;
- un dispositif de sélection de numéros (46, 150, 178, 208; 264) pour composer des numéros d'appel ;
- un premier (36, 270) et un deuxième (284) dispositifs de commande associés respectivement auxdits premier et deuxième ensembles et qui peuvent être actionnés volontairement pour mettre en fonctionnement ou non chacun de ces ensembles ;
- un dispositif de sélection de lignes (52, 54; 272, 274) ; et
- des premiers moyens de commutation (108, 116, 124, 132, 142, 216) sur lesquels peuvent agir lesdits premier et deuxième dispositifs de commande et ledit dispositif de sélection de ligne pour permettre de relier sélectivement ledit dispositif de sélection de numéros et lesdits premier et deuxième ensembles auxdites première et deuxième paires de bornes de connexion,
caractérisé par le fait qu'il comporte également des moyens d'adaptation (48, 50, 84, 92, 100, 102; 280) qui, lorsqu'ils sont dans un premier état, permettent audit dispositif de sélection de numéros et auxdits premier et deuxième ensembles d'être reliés par lesdits premiers moyens de commutation à ladite deuxième paire de bornes de connexion et qui les en empêchent lorsqu'ils sont dans un deuxième état.

2. Appareil selon la revendication 1, caractérisé par le fait que lesdits moyens d'adaptation comprennent des deuxièmes moyens de commutation (84, 92) qui peuvent être mis dans un premier et un deuxième état qui correspondent aux leurs et un troisième dispositif de commande (48, 50; 280) accessible de l'extérieur de l'appareil, qui peut être actionné manuellement pour mettre ces deuxièmes moyens de commutation dans leur premier ou leur deuxième état.

3. Appareil selon la revendication 2, caractérisé par le fait que lesdits premiers (108, 116, 124, 132, 142, 216) et deuxièmes (84, 92) moyens de commutation et ledit dispositif de sélection de ligne (52, 54; 272, 274) sont conçus pour permettre de relier chacun desdits premier (158, 160) et deuxième (186, 188) ensembles isolément et ces deux ensembles à la fois à ladite première paire de bornes de connexion (60, 62) en actionnant respectivement, seulement l'un ou l'autre desdits premier (36; 270) et deuxième (284) dispositifs de commande ou les deux, lorsque lesdits deuxièmes moyens de commutation sont dans leur deuxième état.

4. Appareil selon la revendication 3, destiné à être connecté à deux lignes téléphoniques ou plus, caractérisé par le fait que lesdits premiers (108, 116, 124, 132, 142, 216) et deuxièmes (84, 92) moyens de commutation sont prévus pour coopérer de façon que chaque ensemble (158, 160, 186, 188) soit relié à ladite première paire de bornes de connexion (60, 62) lorsque le dispositif de commande (36) qui lui est associé est actionné pour le mettre en situation de fonctionnement, sans que ledit dispositif de sélection de ligne (52, 54) ait besoin d'agir sur les premiers moyens de commutation, lorsque les deuxièmes moyens de commutation sont dans leur deuxième état, ledit dispositif de sélection de numéros (46, 150, 178, 208) étant alors relié à ladite première paire de bornes de connexion conjointement avec l'ensemble qui est mis en situation de fonctionnement, lorsqu'il est le seul, ou avec celui des ensembles qui est mis le premier dans cette situation lorsqu'ils le sont tous les deux.

5. Appareil selon la revendication 4, caractérisé par le fait que lesdits premiers (108, 116, 124, 132, 142, 216) et deuxièmes (84, 92) moyens de commutation coopèrent en plus pour que, lorsque lesdits deuxièmes moyens de commutation sont dans leur premier état et lorsque l'un desdits ensembles (158, 160, 186, 188) est déjà en situation de fonctionnement et relié, avec ledit dispositif de sélection de numéros (46, 150, 178, 208), à l'une desdites paires de bornes de connexion (60, 62, 64, 66) sélectionnée par ledit dispositif de sélection de ligne (52, 54), l'autre ensemble et ledit dispositif de sélection de numéros soient reliés à l'autre paire de bornes de connexion lorsque le dispositif de commande (36) qui est associé à cet autre ensemble est actionné pour le mettre en situation de fonctionnement, sans que ledit dispositif de sélection de ligne ait besoin d'agir sur lesdits premiers moyens de commutation.

6. Appareil selon la revendication 3, destiné à être connecté à deux lignes téléphoniques au plus, caractérisé par le fait que lesdits premiers et deuxièmes moyens de commutation sont prévus pour coopérer de façon que ledit premier ensemble et ledit dispositif de sélection de numéros (264) soient reliés à ladite première paire de bornes de connexion lorsque le premier dispositif de commande (270) est actionné pour mettre ledit premier ensemble en situation de fonctionnement, sans que ledit dispositif de sélection de ligne (272, 274) ait besoin d'agir sur les premiers moyens de commutation, lorsque les deuxièmes moyens de commutation sont dans leur deuxième état.

7. Appareil selon la revendication 6, caractérisé par le fait que lesdits premiers et deuxièmes moyens de commutation sont également prévus pour que ledit deuxième ensemble soit lui aussi relié à ladite première paire de bornes de connexion sans que ledit dispositif de sélection de ligne (272, 274) ait besoin d'agir sur les premiers moyens de commutation, lorsque les deuxièmes moyens de commutation sont dans leur deuxième état et lorsque ledit premier ensemble et ledit dispositif de sélection de numéros sont déjà reliés à ladite première paire de bornes de connexion.

8. Appareil selon la revendication 6 ou 7, caractérisé par le fait que lesdits premiers et deuxièmes moyens de commutation coopèrent en plus pour que, lorsque lesdits deuxièmes moyens de commutation sont dans leur premier état et lorsque ledit premier ensemble est déjà en situation de fonctionnement et relié, avec ledit dispositif de sélection de numéros (264), à l'une desdits paires de bornes de connexion sélectionnée par ledit dispositif de sélection de ligne (272, 274), le deuxième ensemble et ledit dispositif de sélection de numéros (264) soient reliés à l'autre paire de bornes de connexion lorsque le dispositif de commande (284) qui est associé à ce deuxième ensemble est actionné pour le mettre en situation de fonctionnement, sans que ledit dispositif de sélection de ligne ait besoin d'agir sur lesdits premiers moyens de commutation.

9. Appareil selon l'une quelconque des revendications précédentes, caractérisé par le fait que ledit dispositif de sélection de ligne comprend un autre dispositif de commande (52, 54; 272, 274) qui est accessible de l'extérieur de l'appareil et qui peut être actionné manuellement.

10. Appareil selon l'une quelconque des revendications précédentes, caractérisé par le fait qu'il comprend un dispositif de sonnerie (72, 74, 80, 82) branché entre les bornes de connexion (60, 62, 64, 66) de chacune desdites paires.

11. Appareil selon l'une quelconque des revendications précédentes, caractérisé par le fait qu'il comprend une source lumineuse (56, 58; 276, 278) associée à chaque paire de bornes de connexion (60, 62, 64, 66) pour signaler la ligne d'où provient un appel lorsque l'appareil est relié à plus d'une ligne.

12. Appareil selon l'une quelconque des revendications 1 à 3, caractérisé par le fait qu'il comporte deux combinés (12, 14) qui comprennent chacun un boîtier (20) dans lequel est logé l'un desdits premier et deuxième ensemble (158, 160, 186, 188) et une base (2) capable de porter ce deux combinés, qui comprend un boîtier (4), lesdites paires de bornes de connexion (60, 62, 64, 66), ledit dispositif de sonnerie (72, 74), ledit dispositif de sélection de numéros (46, 150, 178, 208), lesdits premiers (36) et deuxième dispositifs de commande, ledit dispositif de sélection de ligne (52, 54), lesdits premiers moyens de commutation (108, 116, 124, 132, 144, 216) et lesdits moyens d'adaptation (48, 50, 84, 92, 100, 102), et par le fait que lesdits premier et deuxième dispositifs de commande comprennent des organes (36) respectifs qui peuvent être actionnés automatiquement en posant les combinés sur la base et en les décrochant.

13. Appareil selon l'une quelconque des revendications 1 à 3, caractérisé par le fait qu'il comprend un combiné (224) qui comprend un boîtier (228) dans lequel est logé ledit premier ensemble et une base (222) capable de porter ce combiné, qui comprend un boîtier (244), lesdites paires de bornes de connexion, ledit deuxième ensemble, ledit dispositif de sonnerie, ledit dispositif de sélection de numéros (264), lesdits premier (270) et deuxième (284) dispositifs de commande, ledit dispositif de sélection de ligne (272, 274), lesdits premiers moyens de commutation et lesdits moyens d'adaptation (280); par le fait que ledit premier dispositif de commande comprend un bouton-poussoir (270) qui peut être actionné automatiquement en posant le combiné sur la base et en le décrochant; et par le fait que la forme du boîtier de la base et la disposition de l'écouteur et du microphone dudit deuxième ensemble à l'intérieur de celui-ci sont telles que cette base peut être utilisée comme deuxième combiné.

14. Appareil selon la revendication 13, caractérisé par le fait que ledit deuxième dispositif de commande comprend un autre bouton-poussoir (284) placé sous la base (222) et qui peut être actionné automatiquement en posant cette base sur un support et en la soulevant.

Fig.1

Fig.2

Fig. 3

Fig.4

Fig.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 287 511  (ETA S.A. FABRIQ, D'EBAUCHES)  --- | 1,13 | H 04 M    1/72 |
| A | US-A-4 107 477  (MORRISON) * Figures 1; colonne 2, lignes 3-61 * ----- | 1,12 | H 04 M    9/02 H 04 M    1/02 |

|  | DOMAINES TECHNIQUES RECHERCHES (Int. Cl.5) |
|---|---|
|  | H 04 M |

Le présent rapport a été établi pour toutes les revendications

| Lieu de la recherche | Date d'achèvement de la recherche | Examinateur |
|---|---|---|
| LA HAYE | 07-09-1990 | VANDEVENNE M.J. |